# EUROPEAN PATENT APPLICATION

(11) **EP 4 836 027 A1**
(43) Date of publication of application: **04.11.2026**
(21) Application number: 26174736.4
(22) Date of filing: 27.04.2026
(51) Int. Cl.: H01M 4/70, H01M 4/04, H01M 4/66, H01M 4/139

(54) **ELECTRODE FOR RECHARGEABLE LITHIUM BATTERY, APPARATUS FOR MANUFACTURING THE ELECTRODE, AND RECHARGEABLE LITHIUM BATTERY**

(30) Priority: 30.04.2025 KR 20250056971
(71) Applicant: SAMSUNG SDI CO., LTD., Yongin-si, Gyeonggi-do 17084 (KR)
(72) Inventor: PARK, Gwang Won, 16678 Suwon-si (KR); LEE, Seung Hun, 16678 Suwon-si (KR); SHIN, Dong Kyoung, 16678 Suwon-si (KR); JUNG, Da Eun, 16678 Suwon-si (KR); LEE, Mi Young, 16678 Suwon-si (KR)
(74) Representative: Marks & Clerk LLP

(57) **Abstract**

An electrode for a rechargeable battery includes a current collector and a dry electrode film provided on an area of the current collector. The area includes a plurality of protrusions extending from the current collector. The dry electrode film contacts the protrusions in the first area. An average height of the protrusions is greater than 1.0 µm.

## Description

### BACKGROUND

### 1. Field of the Disclosure

The present disclosure relates to an electrode for a rechargeable lithium battery, an apparatus for manufacturing an electrode for a rechargeable lithium battery, and a rechargeable lithium battery.

### 2. Discussion of Related Art

With the rapid spread of electronic devices that use batteries, such as mobile phones, laptop computers, electric vehicles, and the like, the demand for rechargeable batteries with high energy density and high capacity has rapidly increased. Accordingly, there has been research and development into improving the performance of rechargeable lithium batteries.

A rechargeable lithium battery includes a positive electrode and a negative electrode, which include active materials capable of intercalating and deintercalating lithium ions, and an electrolyte. A rechargeable lithium generates electrical energy by oxidation and reduction reactions when lithium ions are intercalated/deintercalated into/from the positive electrode and the negative electrode.

A dry electrode film includes an electrode active material, a binder, a conductive material, and the like. A dry electrode film is manufactured in the form of a film or sheet without solvents. To form an uncoated portion in an electrode including a dry electrode film, a method of pattern-coating a current collector with an adhesion promoting layer has been developed. However, this method has low processability and may be economically infeasible because the pattern coating often must be performed according to the specifications of batteries. In another method, a dry electrode film is laminated to the entire surface of a current collector, and then only a portion of the dry electrode film is removed. However, this method may damage the current collector and/or the dry electrode film.

The above information disclosed in this section is only for enhancement of understanding of the background of the present disclosure and may contain information that does not constitute related or prior art.

### SUMMARY OF THE DISCLOSURE

The present disclosure is directed to providing an electrode for a lithium rechargeable battery, an apparatus for manufacturing an electrode for a lithium rechargeable battery, and a lithium rechargeable battery, which have no adhesion promoting layer, but adhesion between a current collector and a dry electrode film is still high, the formation of an uncoated portion is easy, and manufacturability is excellent.

However, the technical objects to be solved by the present disclosure are not limited, and other objects that are not described herein will be clearly understood by those skilled in the art from the following descriptions of the present disclosure.

According to an aspect of the present disclosure, there is provided an electrode for a rechargeable battery including a current collector, and a dry electrode film provides in an area of the current collector, wherein a plurality of protrusions extend from the current collector in the area, the dry electrode film is in contact with the plurality of protrusions, and an average height of the protrusions is greater than 1.0 µm.

At least a portion of the dry electrode film in the area may be positioned between the protrusions.

An average distance between the protrusions may be 2.0 µm or less.

The area may be free of an adhesion promoting layer.

The protrusions may be configured to provide adhesion with the dry electrode film.

The protrusions may be formed by performing plating on the current collector.

The area may be a first area and the current collector may further include a second area adjacent to the first area, wherein a plurality of projections may extend from the current collector in the second area, and wherein the dry electrode film may not be provided in the second area.

An average height of the protrusions in the second area may be less than the average height of the protrusions in the first area.

The average height of the protrusions in the second area may be 2.0 µm or less.

The protrusions in the first area and the protrusions in the second area may be formed by plating on the current collector.

The current collector may be formed from copper foil, wherein the dry electrode film may include a negative electrode active material and a binder, wherein the negative electrode active material may include at least one of a carbon-based negative electrode active material and a silicon-based negative electrode active material, and the negative electrode active material may have an average particle diameter (D50) of 1 µm to 30 µm, and wherein the binder may include polytetrafluoroethylene (PTFE), polyolefin, or a mixture thereof.
According to another aspect of the present disclosure, there is provided an apparatus for manufacturing an electrode for a rechargeable battery, which includes a current collector transfer device configured to transfer a current collector that includes a plurality of protrusions extending from the current collector, a current collector pressing device configured to press an area of the current collector transferred from the current collector transfer device, a dry electrode film rolling unit configured to laminate a dry electrode film to the current collector transferred from the current collector pressing device and roll the dry electrode film, and a dry electrode film removing device configured to remove a portion of the dry electrode film that corresponds to the pressed area of the current collector in a laminate of the current collector and the dry electrode film transferred from the dry electrode film rolling unit..

The protrusions of the current collector in the current collector transfer device may have an average height of 1.5 µm or more.

The current collector may be free of an adhesion promoting layer.

The current collector pressing device may include at least one of a pressing device including a dancer roller, a lamination roller having a surface partially protrudes, and a vertically movable lamination roller.

The current collector pressing device may be configured to press the current collector transferred from the current collector transfer device by 30% or less of an average height of the protrusions of the current collector.

The dry electrode film rolling device may include a part configured to roll the dry electrode film under conditions of a temperature of 20 °C to 150 °C and a pressure of 0.01 ton/cm to 10 ton/cm.

The dry electrode film removing device may include at least one of a brush, adhesive tape, a vacuum suction device, an ultrasonic wave generator, a laser, and an air knife.

The apparatus may further comprise a tab forming unit configured to form a tab in the area of the dry electrode film.

According to still another aspect of the present disclosure, there is provided a rechargeable battery including the electrode for a rechargeable battery or an electrode for a rechargeable battery manufactured by the apparatus for manufacturing an electrode for a rechargeable battery.

At least some of the above and other features of the invention are set out in the claims.

### BRIEF DESCRIPTION OF THE DRAWINGS

The drawings illustrate embodiments of the present disclosure, and, together with the following detailed description, serve to provide further understanding of the technical scope of the present disclosure. However, the present disclosure is limited to the embodiments set forth in the drawings.
FIG. 1 is a schematic view of a current collector and a dry electrode film that are laminated without rolling.
FIG. 2 is a schematic view of a current collector and a dry electrode film that are laminated and rolled in a first area of an electrode according to an embodiment of the present disclosure.
FIG. 3 shows an interface between a current collector and a dry electrode film in an electrode according to an embodiment of the present disclosure.
FIG. 4 is an enlarged image of a current collector on which a plurality of protrusions are formed before being laminated to a dry electrode film.
FIG. 5 is an enlarged image of an area of an electrode according an embodiment of the present disclosure.
FIG. 6 shows a first area and a second area of an electrode according to an embodiment of the present disclosure.
FIG. 7 shows a first area and a second area of an electrode according to an embodiment of the present disclosure.
FIG. 8 shows an apparatus for manufacturing an electrode according to an embodiment of the present disclosure.
FIG. 9 shows an apparatus for manufacturing an electrode according to an embodiment of the present disclosure.
FIG. 10 shows an apparatus for manufacturing an electrode according to an embodiment of the present disclosure.
FIGS. 11 to 14 show batteries according to embodiments of the present disclosure.

### DETAILED DESCRIPTION OF EXAMPLE EMBODIMENTS

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical scope, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting on the full scope of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an element "above (or below)" or "on (under)" another element may mean that the element may be disposed in contact with the upper (or lower) surface of the element, and another element may also be interposed between the element and the element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

### Electrode for lithium rechargeable battery

An electrode for a lithium rechargeable battery according to an embodiment of the present disclosure (hereinafter referred to as "electrode") is a dry electrode including a dry electrode film. The electrode includes a current collector including a first area, and a dry electrode film positioned on at least one surface of the current collector in the first area.

The current collector does not include an adhesion promoting layer. For example, the current collector may not include an adhesion promoting layer in the first area. Here, an "adhesion promoting layer" means a layer positioned on the surface of the current collector to increase adhesion between the current collector and the dry electrode film. Such an adhesion promoting layer may include a primer layer. The primer layer may be formed of a composition including a conductive material and a binder. "Adhesion promoting layer" may also be a general term for a layer that increases adhesion between the current collector and the dry electrode film in the dry electrode film.

The first area includes a plurality of protrusions formed to extend from the current collector. The plurality of protrusions protrude from the current collector to a predetermined height. When the current collector and the dry electrode film are laminated and rolled, the plurality of protrusions may penetrate into the dry electrode film to provide an anchoring effect of physically coupling the current collector and the dry electrode film. Accordingly, the dry electrode film and the plurality of protrusions may be in close contact with each other to increase adhesion between the current collector and the dry electrode film. The plurality of protrusions provide adhesion with the dry electrode film.

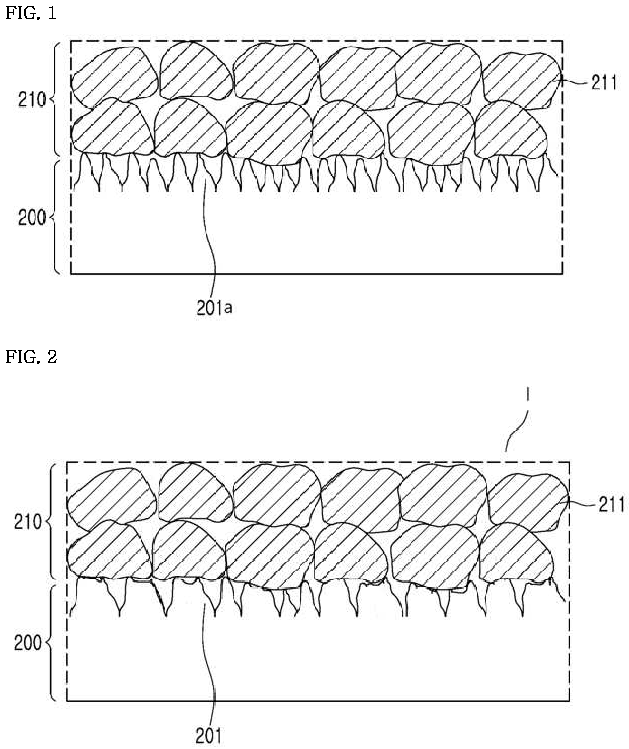

FIGS. 1 and 2 show an improvement in attachment between a current collector 200 and a dry electrode film 210 through a plurality of protrusions 201a in an electrode according to an embodiment of the present disclosure. FIG. 1 is a schematic view of a current collector and a dry electrode film that are laminated without rolling. FIG. 1 shows a state in which the current collector 200 and the dry electrode film 210 are laminated without rolling. FIG. 2 is a schematic view of a current collector and a dry electrode film that are laminated and rolled in a first area of an electrode according to an embodiment of the present disclosure. FIG. 2 shows a state in which the current collector 200 and the dry electrode film 210 are laminated and rolled in a first area of the electrode according to an embodiment of the present disclosure.

Referring to FIG. 1, it is a state in which a dry electrode film 210 includes an active material 211 and a binder and is laminated without rolling to a current collector 200 that includes a plurality of protrusions 201a.

Referring to FIG. 2, a dry electrode I is made when the current collector 200 and the dry electrode film 210 are laminated and rolled. In the dry electrode I, protrusions 201 penetrate the dry electrode film 210, thereby increasing adhesion between the current collector 200 and the dry electrode film 210 as compared to a current collector that does not include protrusions. Here, the term "adhesion" refers to a force when the dry electrode film 210 is peeled off from the current collector 200 under certain conditions and may be defined as a value measured using a 180° peel test method.

Although not shown in FIG. 2, the plurality of protrusions 201 may penetrate into the dry electrode film 210 so that at least a portion of the dry electrode film 210 in the first area are positioned between the protrusions 201.

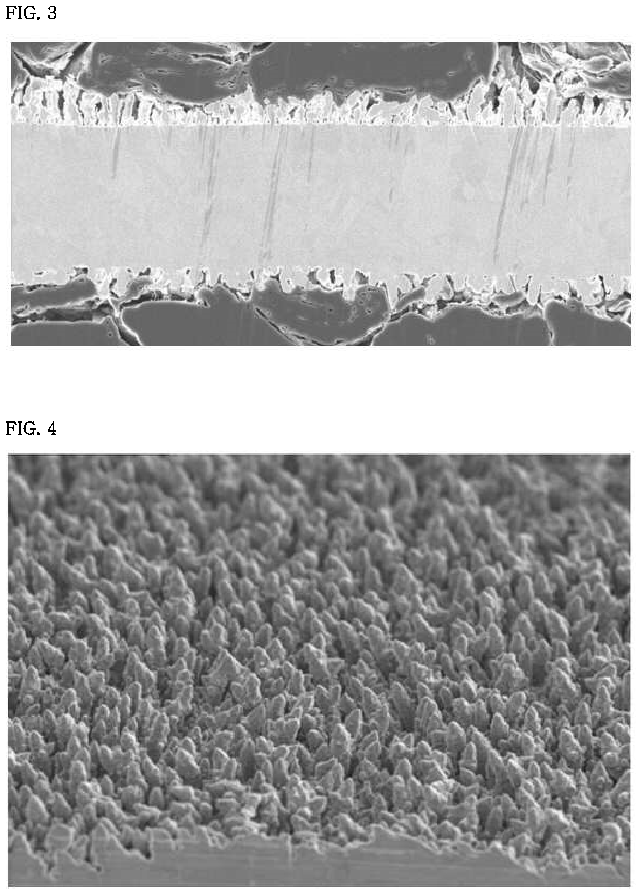

FIG. 3 is an enlarged image showing an interface between a current collector and a dry electrode film in an electrode according to an embodiment of the present disclosure.

Referring to FIG. 3, it can be seen that the protrusions extend from the current collector and penetrate into the dry electrode film. Thus, it can be seen that the current collector and the dry electrode film are in close contact with each other such that the protrusions effectively replace a conventional adhesion promoting layer.

According to an embodiment, an average height of the protrusions may be greater than 1.0 µm, for example, in a range of 1.5 µm to 2.5 µm. The average height of the protrusions is set so as to provide a first area having high adhesion to a dry electrode film and a second area without adhesion to the dry electrode film. Here, the "average height" is an average value of heights of the protrusions in the current collector and is an average value of heights from a surface of the current collector to the highest points of the protrusions. The average height may be determined using a high-resolution scanning electron microscope (HR-SEM) image captured through cross-section processing using a cross section polisher (CP), a focused ion beam (FIB) or the like or an average value of heights obtained from values measured from the lowest points to the highest points of the protrusions through a non-destructive method such as an analysis method using a laser microscope. Here, "height of a protrusion" may refer to a vertical distance from one end of the protrusion to the current collector when the nodule extends from the current collector in a direction that is vertical to the current collector and may refer to a vertical distance from the surface of the current collector to the highest point of the protrusion when the nodule extends from the current collector in a direction other than the direction that is vertical to the current collector.

According to embodiments, an average interval between the plurality of protrusions may be greater than 1.0 µm, for example, in a range of 2.0 µm to 3.5 µm, 2.0 µm to 3.0 µm, or 2.0 µm to 2.5 µm. In these ranges, a degree of penetration of the protrusions into the dry electrode film may be increased, thereby facilitating an increase in adhesion between the dry electrode film and the current collector. Here, the "average interval" may be an average value of the intervals between the protrusions in the current collector and may be measured through image analysis or non-destructive analysis in the same manner as the height.

In some embodiments, the protrusions may have needle-like shapes. Protrusions having needle-like shapes may easily penetrate into the dry electrode film, which can facilitate an increase in adhesion between the current collector and the dry electrode film.

FIG. 4 is an enlarged image of a current collector on which a plurality of protrusions are formed before being laminated to a dry electrode film. Referring to FIG. 4, the plurality of protrusions may have needle-like shapes of which a topmost surface sharply protrudes which may be advantageous in increasing the adhesion.

So long as the protrusions formed on the current collector have the above-described shapes, the above-described average heights, and the above-described average intervals, there is no limitation with respect to the method of forming the plurality of protrusions. However, in one example to form the protrusions integrally with the current collector, the protrusions may be formed by plating.

According to an embodiment, the plurality of protrusions may be formed on the current collector by plating. The plating may be electrolytic plating or electroless plating, but preferably is electrolytic plating.

The electrolytic plating may be performed by the following method, but the present disclosure is not limited in this regard. Hereinafter, the description is directed to a case in which the current collector is formed from copper foil, but the present disclosure is not limited thereto.

The electrolytic plating may be performed by adjusting an aqueous solution including a nickel salt and a copper salt to have a pH of 1 to 5 (for example, 2 to 4) to prepare an electrolyte, introducing a current collector and an insoluble positive electrode or negative electrode into the electrolyte, and then performing electrolysis at an electrolyte temperature of 25 °C to 45 °C and a current density of 1 A/dm² to 5 A/dm² for 1 second to 5 seconds. Examples of the nickel salt include nickel sulfate, nickel nitrate, nickel chloride, and nickel acetate, which may be used alone or in a combination of two or more. But the present disclosure is not limited to these examples. Examples of the copper salt include copper sulfate, copper nitrate, copper chloride, and copper acetate, which may be used alone or in a combination of two or more. But the present disclosure is not limited to these examples.

The concentration of the nickel salt and copper salt in the electrolyte may be adjusted in consideration of the average height of the protrusions.

The electrolytic plating may be performed in an electrolyte including the above-described nickel salt and copper salt. But electrolytic plating using an aqueous solution including a copper salt and sulfuric acid may also be additionally performed. Examples of the copper salt include copper sulfate, copper nitrate, copper chloride, and copper acetate, which may be used alone or in a combination of two or more, but the present disclosure is not limited thereto. The electrolytic plating may be performed by introducing the electroplated current collector and an insoluble electrode into the electrolyte as a positive electrode or negative electrode and performing electrolysis at a solution temperature of 25 °C to 45 °C and a current density of 10 A/dm² to 20 A/dm² for 1 second to 5 seconds. But the present disclosure is not limited in this regard.

Because the plurality of protrusions extend from the current collector and protrude from the current collector, when the current collector is pressed without the laminating of the dry electrode film, the protrusions may be crushed. This may make it impossible to implement the above-described anchoring effect.

To avoid such a situation, a second area of the current collector may be formed. According to an embodiment, the second area may be an uncoated portion of an electrode.

Accordingly, the electrode may include a current collector having the first area and the second area formed adjacent to the first area. The second area may be an uncoated portion where the dry electrode film is not provided.

The second area may include a plurality of protrusions formed to extend from the current collector. The protrusions in the second area may have a lower average height than the protrusions in the first area. Thus, when a dry electrode film is laminated to a current collector and rolled, adhesion of the current collector to the dry electrode film may be reduced to make it easy to remove the dry electrode film, which makes it easy to form the second area that is the uncoated portion.

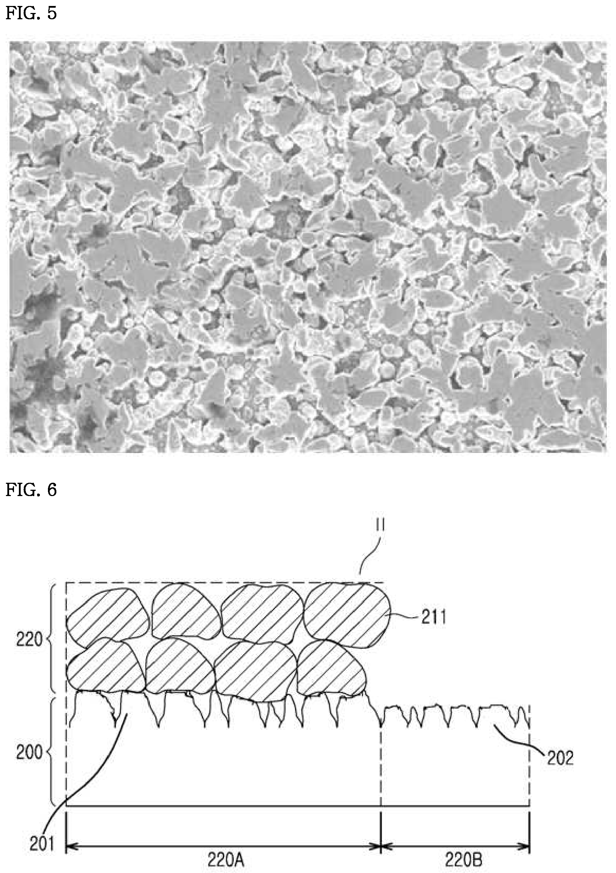

FIG. 5 is an enlarged image of a second area in an electrode according to an embodiment of the present disclosure. It can be seen that protrusions in the second area have been crushed. It also can be seen that the protrusions in FIG. 3 more maintain a needle-like shape as compared to the protrusions in FIG. 5.

An average height of the protrusions in the second area may be lower than an average height of the protrusions in the first area. Thus, the formation of the second area, that is, an uncoated portion, in a dry electrode may be facilitated.

According to embodiments, the average height of the protrusions in the second area may be 1.0 µm or less, for example, in a range of 0 µm to 1.0 µm. In this range, the removal of a dry electrode film from a current collector may be facilitated. Here, the average height of the protrusions in the second area may be measured in the same manner as described above with respect to the average height of the protrusions in the first area.

FIG. 6 shows a first area and a second area of an electrode II according to an embodiment of the present disclosure.

Referring to FIG. 6, an electrode II includes a current collector 200 including a first area 220A and a second area 220B. A dry electrode film 220 including an active material 211 and a binder is formed in the first area 220A, and a dry electrode film 220 is not formed in the second area 220B.

A plurality of protrusions 201 included in the first area 220A may penetrate into the dry electrode film 220 to increase adhesion between the current collector 200 and the dry electrode film 220. A plurality of protrusions 202 formed in the second area 220B have a lower average height than the plurality of protrusions 201 formed in the first area 220A.

The dry electrode film 220 may be formed on one surface of the current collector 200 or be formed on opposite two surfaces of the current collector 200.

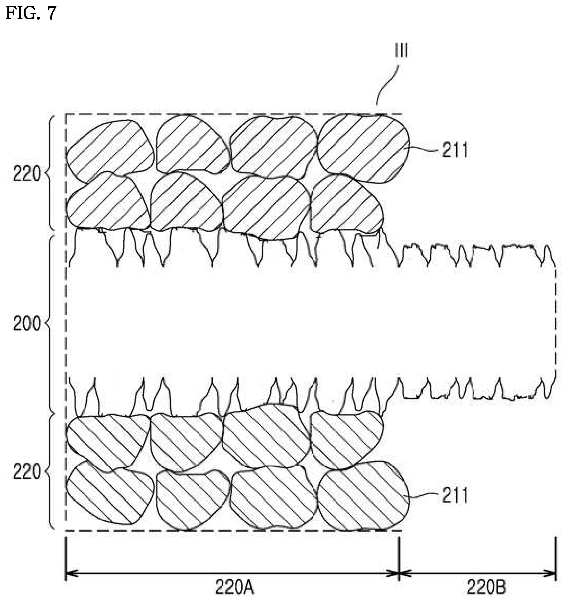

FIG. 7 shows a first area and a second area of an electrode III according to another embodiment of the present disclosure. Referring to FIG. 7, the electrode III is substantially the same as the electrode II of FIG. 6, except that a dry electrode film 220, a first area 220A, and a second area 220B are formed on opposite surfaces of the current collector 200.

A plurality of protrusions formed in the second area 200B may be formed simultaneously with a plurality of protrusions formed in the first area 200A. Thus, a manufacturing process of the electrode III can be improved. The plurality of protrusions in the first area and the plurality of protrusions in the second area are formed by plating on the current collector.

The plurality of protrusions are formed on one or both opposite surfaces of the current collector 200 through the above-described plating process, but only the protrusions in the second area 200B of the current collector 200 are first pressed, and the dry electrode film 220 is laminated to the entire surface of the current collector 200 and rolled. Then, only the dry electrode film 220 corresponding to the second area 200B is removed to thereby form the electrode III. Thus, in the electrode III, the first area 200Aand the second area 200B may be simultaneously formed using a current collector 200, with protrusions formed by electrolytic plating and without pattern coating of an adhesion promoting layer, thereby improving manufacturability and reducing the possibility of damage to the electrode.

An electrode according to embodiments of the present disclosure may be a negative electrode or a positive electrode. That is, the electrode may be a negative electrode, or the electrode may be a positive electrode.

### Negative electrode

The negative electrode may include a current collector including a first area, and a dry electrode film positioned on at least one surface of the current collector in first area, wherein the current collector in the first area may include a plurality of protrusion extending from the current collector. The dry electrode film may be in contact with the plurality of protrusions, and the dry electrode film may include a negative electrode active material and a binder.

The current collector is not particularly limited as long as it provides high conductivity and does not cause an undesirable chemical change in a battery. For example, the current collector may be made of stainless steel, aluminum, nickel, titanium, calcined carbon, copper, aluminum, or stainless steel, copper foil, nickel foil, stainless steel foil, titanium foil, nickel foam, copper foam, or a polymer substrate coated with a conductive metal and surface-treated with carbon, nickel, titanium, or silver.

The current collector may have a thickness of 1 µm to 30 µm, but the present disclosure is not particularly limited in this regard. For example, the current collector may have a thickness of 3 µm to 20 µm and may be formed from a copper foil.

The dry electrode film may include the negative electrode active material and the binder and may optionally include an electrode powder including a conductive material. The dry electrode film may be in the form of a film, strip or sheet having a predetermined thickness.

The negative electrode active material includes at least one of a material capable of reversibly intercalating/deintercalating lithium ions, a lithium metal, a lithium metal alloy, a material capable of doping and undoping lithium, or a transition metal oxide.

The material capable of reversibly intercalating/deintercalating lithium ions may include a carbon-based negative electrode active material, for example, crystalline carbon, amorphous carbon, or a combination thereof. Examples of the crystalline carbon include graphite such as natural graphite or artificial graphite. Examples of the amorphous carbon may include soft carbon, hard carbon, mesophase pitch carbide, and calcined coke.

As the material capable of doping and dedoping lithium, a Si-based negative electrode active material or a Sn-based negative electrode active material may be used. The Si-based negative electrode active material may be silicon, a silicon-carbon composite, SiOₓ (0<x<2), a Si-based alloy, or a combination thereof. According to an embodiment, the negative electrode active material includes at least one of a carbon-based negative electrode active material and a Si-based negative electrode active material.

The silicon-carbon composite may be a composite of silicon and amorphous carbon. According to an embodiment, the silicon-carbon composite may be in a form including silicon particles and amorphous carbon coating.

The silicon-carbon composite may further include crystalline carbon. For example, the silicon-carbon composite may include cores including crystalline carbon and silicon particles and amorphous carbon coating layers surfaces of the cores.

In a specific example, the negative electrode active material may have an average particle diameter D50 of 1 µm to 30 µm, for example, 4 µm to 20 µm. The above-described current collector may be used with theses range.

The binder may may be fibrillated in an operation of manufacturing a dry electrode film. The fibrillation may be treatment of finely dividing a polymer. For example, the fibrillation may be performed using a mechanical shear force or the like. Surfaces of fibrillated polymer fibers are unraveled to generate a plurality of fine fibers, and the fine fibers aggregate the electrode active material and/or a conductive material, thereby enabling a dry electrode film to be manufactured.

In specific embodiments, the binder may include polytetrafluoroethylene (PTFE), polyolefin, or a mixture thereof. Specifically, the binder may include PTFE, and more specifically, may be PTFE. The PTFE may be included in an amount of 60 wt% or more, for example, 90 wt% to 100 wt%, with respect to the total weight of the binder.

In other embodiments, the binder may further include a non-fibrillated binder. The non-fibrillated binder may include, for example, at least one of polyethylene oxide, polyvinylidene fluoride, and polyvinylidene fluoride-co-hexafluoropropylene.

In some embodiments, the binder may be included in the dry electrode film in a fibrillated state.

The conductive material may include a carbon black compound or graphite such as natural graphite or artificial graphite; a conductive fiber such as a carbon fiber or metal fiber; fluorinated carbon, aluminum, and a metal powder such as a nickel powder; a conductive whisker such as zinc oxide or potassium titanate; a conductive metal oxide such as titanium oxide; or a conductive material such as a polyphenylene derivative.

In an embodiment, in the dry electrode film, the negative electrode active material may be included in an amount of 80 wt% to 99 wt%, for example, 90 wt% to 99.5 wt%, the binder may be included in an amount of 0.5 wt% to 20 wt%, for example, 0.5 wt% to 10 wt%, and the conductive material may be included in an amount of 0.5 wt% to 20 wt%, for example, 0.5 wt% to 10 wt%. In these ranges, the manufacturing of the dry electrode film can be facilitated, and there can be an effect of promoting PTFE fibrillation in an electrode to improve mechanical strength.

### Positive electrode

The positive electrode may include a current collector having a first area, and a dry electrode film positioned on at least one surface of the current collector in the first area. The current collector in the first area may include protrusions extending from the current collector. The dry electrode film may be in contact with the protrusions, and the dry electrode film may include a positive electrode active material and a binder.

The current collector described above with respect to the negative electrode may be used as the current collector in the positive electrode.

The dry electrode film may include the positive electrode active material and the binder and may optionally include an electrode powder including a conductive material. The dry electrode film may be in the form of a film, a strip or sheet having a predetermined thickness.

As the positive electrode active material, a compound capable of reversibly intercalating and deintercalating lithium (a lithiated intercalation compound) may be used. Specifically, at least one composite oxide of lithium and a metal selected from cobalt, manganese, nickel, and a combination thereof may be used.

The composite oxide may be a lithium transition metal composite oxide. Specific examples of the composite oxide include a lithium nickel-based oxide, a lithium cobalt-based oxide, a lithium manganese-based oxide, a lithium iron phosphate-based compound, a cobalt-free nickel-manganese-based oxide, or a combination thereof. As examples, a compound represented by any one of the following formulas may be used: LiₐA_{1-b}X_{b}O_{2-c}D_{c}, wherein 0.90≤a≤1.8, 0≤b≤0.5, and 0≤c≤0.05; LiₐMn_{2-b}X_{b}O_{4-c}D_{c}, wherein 0.90≤a≤1.8, 0≤b≤0.5, and 0≤c≤0.05; LiₐNi_{1-b-c}Co_{b}X_{c}O_{2-α}D_{α}, wherein 0.90≤a≤1.8, 0≤b≤0.5, 0≤c≤0.5, and 0<α<2; LiₐNi_{1-b-c}Mn_{b}X_{c}O_{2-α}D_{α}, wherein 0.90≤a≤1.8, 0≤b≤0.5, 0≤c≤0.5, and 0<α<2; LiₐNi_{b}Co_{c}L¹_{d}GₑO₂, wherein 0.90≤a≤1.8, 0≤b≤0.9, 0≤c≤0.5, 0≤d≤0.5, and 0≤e≤0.1; LiₐNiG_{b}O₂, wherein 0.90≤a≤1.8 and 0.001≤b≤0.1; LiₐCoG_{b}O₂, wherein 0.90≤a≤1.8 and 0.001≤b≤0.1; LiₐMn_{1-b}G_{b}O₂, wherein 0.90≤a≤1.8 and 0.001≤b≤0.1; LiₐMn₂G_{b}O₄, wherein 0.90≤a≤1.8 and 0.001≤b≤0.1; LiₐMn_{1-g}G_{g}PO₄, wherein 0.90≤a≤1.8 and 0≤g≤0.5; Li_{(3-f)}Fe₂(PO₄)₃, wherein 0≤f≤2; and LiₐFePO₄, wherein 0.90≤a≤1.8. In these formulas, A is Ni, Co, Mn, or a combination thereof, X is Al, Ni, Co, Mn, Cr, Fe, Mg, Sr, V, a rare earth element, or a combination thereof, D is O, F, S, P, or a combination thereof, G is Al, Cr, Mn, Fe, Mg, La, Ce, Sr, V, or a combination thereof, and L1 is Mn, Al, or a combination thereof.

In a specific example, the positive electrode active material may have an average particle diameter D50 of 0.1 µm to 30 µm, for example, 0.5 µm to 20 µm. The above-described current collector may be used in these ranges.

The binder and the conductive material may be substantially the same as those described with above respect to the negative electrode.

In an embodiment, in the dry electrode film, the positive electrode active material may be included in an amount of 80 wt% to 99 wt%, for example, 90 wt% to 99.5 wt%, the binder may be included in an amount of 0.5 wt% to 20 wt%, for example, 0.5 wt% to 10 wt%, and the conductive material may be included in an amount of 0.5 wt% to 20 wt%, for example, 0.5 wt% to 10 wt%. In these ranges, the manufacturing of the dry electrode film can be facilitated, and there can be an effect of promoting PTFE fibrillation in an electrode to improve mechanical strength.

The dry electrode film may be made through the following operations. The following method may be applied to each of the negative electrode and the positive electrode:
(a) preparing a powder mixture including an electrode active material, a binder, and a conductive material;
(b) kneading the powder mixture to prepare a mixture lump;
(c) pulverizing the mixture lump to obtain an electrode powder; and
(d) calendering the electrode powder to obtain a self-standing dry electrode film.

First, the electrode active material, the binder, and the conductive material are mixed to prepare the powder mixture. The mixing is performed such that the electrode active material and the binder may be uniformly distributed in the mixture. Because the electrode active material and the binder are mixed in a powder form, the mixing is not particularly limited so long as the mixing enables the electrode active material and the binder to be mixed. However, because the mixture is for making a dry electrode film, the mixture does not include a solvent. The mixing may be performed through dry mixing, for example by introducing the materials into a device such as a blender.

In an embodiment, a time of the mixing is not particularly limited, but the mixing may be performed for 1 second to 10 minutes. A speed of the mixing is not limited, but may be appropriately controlled in a range of about 3,000 rpm to 30,000 rpm. As a specific example, the mixture may be prepared by mixing in a mixer at a speed of 5,000 rpm to 20,000 rpm for 30 seconds to 2 minutes, specifically, at a speed of 10,000 rpm to 15,000 rpm for 30 seconds to 5 minutes, which thereby provides high uniformity and control of the crystallinity of a binder resin.

Next, a kneading process is performed on the mixture obtained above to fibrillate the binder. The kneading is an operation of forming a mixture lump having a solid content of 100 wt% by coupling or connecting the electrode active materials and/or the conductive material while fibrillating the binder.

Specifically, the kneading may be controlled at a speed of 10 rpm to 100 rpm. For example, the kneading may be controlled at a speed of 40 rpm to 70 rpm within the above range. The kneading may be performed for 1 minute to 30 minutes. For example, the kneading may be performed for 3 minutes to 7 minutes at a speed of 40 rpm to 70 rpm within the above range. A shear rate in the kneading may be controlled in a range of 10/s to 500/s. In a specific embodiment of the present disclosure, the kneading may be performed for 1 minute to 30 minutes, and the shear rate may be controlled in a range of 30/s to 100/s.

The kneading may be performed under conditions of high temperature and pressure greater than or equal to atmospheric pressure, and more specifically, may be performed under conditions of pressure greater than or equal to atmospheric pressure. More specifically, the kneading may be performed at a temperature ranging from 70 °C to 200 °C, specifically, 90 °C to 150 °C.

In addition, the kneading may be performed at a pressure greater than or equal to atmospheric pressure, specifically at a pressure of 1 atm to 3 atm, or more specifically at a pressure of 1.1 atm to 3 atm. When the kneading is performed at a pressure above this range, excessive shear force and pressure may be applied to cut formed fibers or excessively increase a density of a mixture lump, which is not preferable. That is, according to the present disclosure, when a low-shear mixing process is performed under conditions of high temperature and pressure greater than equal to atmospheric pressure instead of high-shear mixing, the effects described herein can be achieved.

Next, an operation of re-pulverizing the mixture lump prepared through the kneading to obtain an electrode powder is performed. Specifically, the mixture lump prepared through the kneading may be directly calendered. But the mixture lump may need to be pressed under higher pressure and high temperature to form a thin film, which may lead to problems in which the density of the film becomes too high or a uniform film cannot be obtained. Thus, the prepared mixture lump may be pulverized.

The pulverizing may be performed using a known pulverizing device such as a blender or a grinder, but the present disclosure is not limited thereto. In a specific embodiment of the present disclosure, a speed of the pulverizing may be controlled within a range of 3,000 rpm to 30,000 rpm. A time of the pulverizing may be within a range of 1 second to 10 minutes. However, the speed and time of the pulverizing are not limited to these range. As specific examples, the pulverizing may be performed at a speed of 5,000 rpm to 20,000 rpm for 30 seconds to 10 minutes or at a speed of 10,000 rpm to 18,000 rpm for 30 seconds to 5 minutes. Since sufficient pulverizing is performed in these ranges, the formation of a film may be facilitated, and the generation of fine powders may be reduced.

The electrode powder is heated and pressed to make the dry electrode film. Specifically, the electrode powder obtained by completing the pulverization as described above is introduced into a calendering process. The electrode powder is heated and pressed through the calendering process and processed into a dry electrode film with a film, strip or sheet form. The calendering process may be performed by a pair of opposite calendering rollers. In an embodiment, the calendering process may be performed by passing the electrode powder between a plurality of calendering rollers.

The electrode powder may be subjected to a pretreatment process before the calendering process is performed. The pretreatment process may be performed through a method in which heat is applied to the electrode powder such that a temperature of a powder is maintained at 80 °C or more, preferably 100 °C or more, for a predetermined time. The pretreatment process may be performed for 1 minute or more, but the time may be adjusted according to an amount of powder. For example, the temperature of the powder may be maintained at a temperature of 80 °C or more for 1 minute or more or at a temperature of 100 °C or more for 1 minute or more. Alternatively, a heating temperature of the electrode powder is controlled to be lower than or equal to a melting point of a binder resin to prevent degradation of an electrode component included in the electrode powder such as a binder resin that is being used. The heating temperature of the electrode powder may be controlled to be lower than or equal to 320 °C. The pretreatment process may be performed using a commonly used heating device such as a convection oven or an infrared heating device. It is preferable that the electrode powder does not stagnate while being stirred and heated.

### Apparatus for manufacturing electrode for rechargeable battery

Hereinafter, an apparatus for manufacturing an electrode for a rechargeable battery will be described.

The apparatus for manufacturing an electrode for a rechargeable battery may form an electrode including the first area and the second area. In other embodiments, the apparatus for manufacturing an electrode for a rechargeable battery may be used to make an electrode including only the first area.

The apparatus for manufacturing an electrode for a rechargeable battery includes a current collector transfer unit that transfers a current collector, wherein the current collector includes a plurality of protrusions extending from the current collector. The apparatus also includes a current collector pressing unit that presses one area of the current collector transferred from the current collector transfer unit. A dry electrode film rolling unit laminates a dry electrode film to the current collector transferred from the current collector pressing unit and rolls the dry electrode film. A dry electrode film removing unit removes the dry electrode film corresponding to the pressed current collector in a laminate of the current collector and the dry electrode film transferred from the dry electrode film rolling unit.

The current collector transfer unit is a part that initiates the manufacturing of the electrode by transferring the current collector with the protrusions on one surface or both surfaces.

In an embodiment, the current collector transfer unit may include a part for unwinding the current collector from a roll on which the current collector is wound.

The plurality of protrusions of the current collector that is unwound by the current collector transfer unit may be made by performing plating on a current collector. According to an embodiment, the plurality of protrusions of the current collector in the current collector transfer unit may be formed on one entire surface or opposite both surfaces of the current collector. An average height of the plurality of protrusions of the current collector in the current collector transfer unit may be 1.5 µm or more, for example, in a range of 2 µm to 5 µm or 2 µm to 3 µm. In these ranges, the formation of both the first area and the second area in the electrode may be facilitated.

The current collector pressing unit presses one area of the current collector transferred from the current collector transfer unit. The current collector pressing unit may reduce adhesion to the dry electrode film later by pressing an area of the current collector to crush the protrusions formed on the current collector in the area. Low adhesion to the dry electrode film may facilitate the formation of the second area.

The pressing part is not limited so long as the current collector pressing unit presses only one area of the current collector. In a specific embodiment, the current collector pressing unit may include at least one of a dancer roller, a lamination roller of which a surface partially protrudes, a vertically movable lamination roller, and a combination thereof.

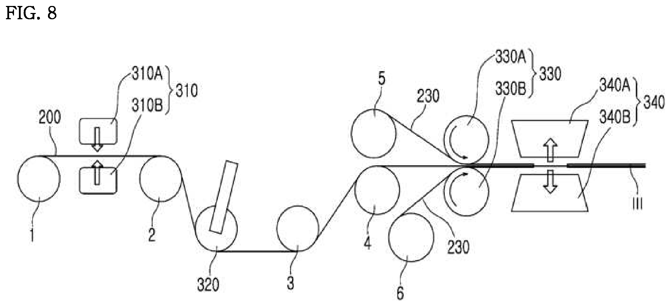

The pressing unit including the dancer roller includes a pressing part for pressing an area of the current collector during the transfer of the current collector and includes a dancer roller for controlling the travelling of the current collector. This will be described in detail below with reference to FIG. 8.

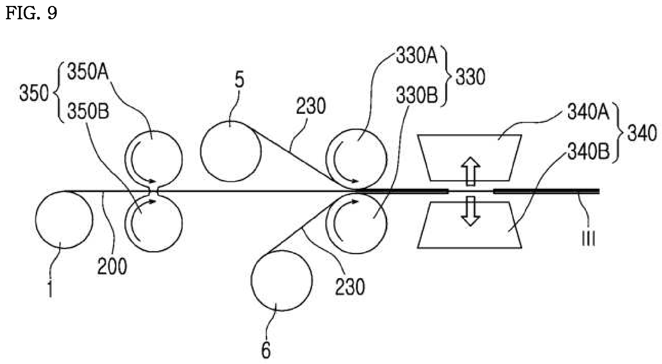

Because the surface of the lamination roller partially protrudes when the current collector is transferred, the lamination roller of which the surface partially protrudes presses a portion of the current collector when the lamination roller rotates. This will be described in detail below with reference to FIG. 9.

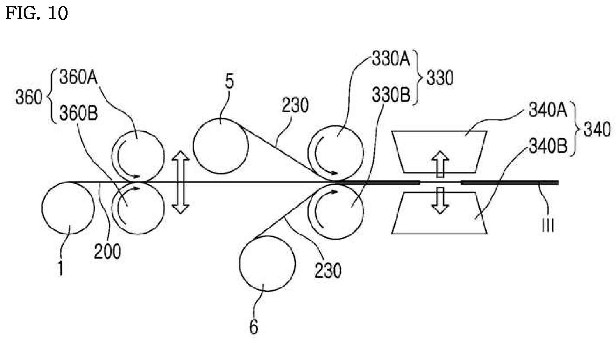

The vertically movable lamination roller presses a portion of the current collector by moving downward and rotating only at a target portion when the current collector is transferred. This will be described in detail below with reference to FIG. 10.

In a specific example, the current collector pressing unit may press the current collector transferred from the current collector transfer unit by 40% or less, 30% or less of an average height of the protrusions. Within this range, the manufacturing of the second area can be facilitated. For example, the current collector pressing unit may press the current collector by 1% to 30% or 5% to 25% of the average height.

The current collector pressing unit may press the current collector under a pressure of 0.1 ton/cm or more and a temperature of 20 °C to 150 °C.

The dry electrode film rolling unit laminates the dry electrode film to the current collector transferred from the current collector pressing unit and rolls the dry electrode, thereby laminating the dry electrode film to the entire surface of the current collector and rolling the dry electrode film. The dry electrode film rolling unit may include equipment for laminating and rolling the current collector and the dry electrode film as in manufacturing a conventional dry electrode film.

According to an embodiment, the dry electrode film rolling unit rolls the dry electrode film at a temperature of 20°C to 150°C and a pressure of 0.01 ton/cm to 10 ton/cm.

The dry electrode film removing unit forms a second area by removing the dry electrode film corresponding to the pressed current collector in a laminate of the current collector and the dry electrode film transferred from the dry electrode film rolling unit. The dry electrode film removing unit may remove only the dry electrode film that is not attached to the current collector or is attached with a weak adhesive force. The dry electrode film may be removed using a conventional film removing device known to those skilled in the art. For example, the dry electrode film removing unit may include a device that removes a dry electrode film through direct contact using a brush or adhesive tape and then using a vacuum suction device, or an indirect removing device using ultrasonic waves, lasers, or air knives.

The plurality of protrusions in the second area may have a low average height, which may facilitate the manufacturing of the dry electrode film without damage to the current collector and/or the dry electrode film.

FIGS. 8 to 10 are views of an apparatus for manufacturing an electrode for a rechargeable battery according to an embodiment of the present disclosure.

Referring to FIG. 8, a current collector 200 provided with a plurality of protrusions is unwound and moved from an unwinding roller 1 of a current collector transfer unit. Transfer rollers 2, 3, and 4 are included to facilitate the transfer of the current collector 200.

The current collector 200 transferred from the unwinding roller 1 passes between current collector pressing parts 310 (310A, 310B) positioned to opposite surfaces of the current collector 200, and the movement of the current collector 200 is controlled by a dancer roller 320. The movement of the current collector 200 may be stopped and adjusted along the dancer roller 320, and a portion of the current collector 200 may be pressed by the current collector pressing parts 310 (310A, 310B).

The current collector 200 having passed the current collector pressing part 310 and the dancer roller 320 is laminated with a dry electrode film 230 unwound from unwinding rollers 5 and 6 and rolled by rolling units 330 (330A, 330B).

A portion of the current collector 200 passing between the rolling units 330 (330A, 330B) may be detached by dry electrode film detachment units 340 (340A,340B), thereby manufacturing the electrode III of FIG. 7.

Although not shown in FIG. 8, the apparatus for manufacturing an electrode may further include an adjustment unit for adjusting a moving speed of the current collector 200 in the current collector transfer unit, a current collector pressing unit, a dry electrode film rolling unit, and a dry electrode film removing unit, and a speed of the dry electrode film.

Referring to FIG. 9, a current collector 200 with two surfaces provided with protrusions formed thereon is unwound and moved from the unwinding roller 1 of the current collector transfer unit.

The current collector 200 transferred from the unwinding roller 1 passes between lamination rollers 350 (350A, 350B) of which surfaces positioned on both surfaces of the current collector 200 partially protrude. When the lamination roller 350 rotates, one area of the current collector 200 may be pressed by a protruding portion.

The current collector 200 passes between the lamination rollers 350 (350A,350), which have partially protruding surfaces, and is laminated to the dry electrode film 230 unwound from the unwinding rollers 5, 6 and rolled by the rolling units 330 (330A, 330B).

A portion of the current collector 200 passing between the rolling units 330 (330A, 330B) may be detached by the dry electrode film detachment units 340 (340A, 340B), thereby manufacturing the electrode III of FIG. 7.

Although not shown in FIG. 9, the apparatus for manufacturing an electrode may further include an adjustment unit for adjusting a moving speed of the current collector in the current collector transfer unit, the current collector pressing unit, the dry electrode film rolling unit, and the dry electrode film removing unit, and a speed of the dry electrode film.

Referring to FIG. 10, a current collector 200 having two surfaces provided with protrusions formed thereon is unwound and moved from the unwinding roller 1 of the current collector transfer unit.

The current collector 200 transferred from the unwinding roller 1 passes through vertically movable lamination rollers 360 (360A, 360B) positioned to opposite surfaces of the current collector 200. One area of the current collector 200 may be pressed by the vertical movement of the lamination roller 360.

The current collector 200 passing through the vertically movable lamination rollers 360 (360A, 360B) is laminated to the dry electrode film 230 unwound from the unwinding rollers 5, 6 and rolled by the rolling units 330 (330A, 330B).

A portion of the current collector 200 passing between the rolling units 330 (330A, 330B) may be detached by the dry electrode film detachment units 340 (340A, 340B), thereby manufacturing the electrode III of FIG. 7.

Although not shown in FIG. 10, the apparatus for manufacturing an electrode may further include an adjustment unit for adjusting a moving speed of the current collector in the current collector transfer unit, the current collector pressing unit, the dry electrode film rolling unit, and the dry electrode film removing unit, and a speed of the dry electrode film.

The apparatus for manufacturing an electrode for a rechargeable battery may further include a tab forming unit that forms a tab in an area from which the dry electrode film is removed, that is, a second area. The tab forming unit may include a part forming a tab in an uncoated portion.

### Method of manufacturing electrode for rechargeable battery

Hereinafter, a method of manufacturing an electrode for a rechargeable battery will be described.

The method of manufacturing an electrode may include forming a plurality of protrusions on one entire surface or all of two surfaces of a current collector through the above-described plating (operation 1), pressing only protrusions in a second area of the current collector (operation 2), laminating a dry electrode film to one entire surface or all of two surfaces of the current collector and then rolling the dry electrode film (operation 3), and removing only the dry electrode film corresponding to the second area (operation 4). In the method of manufacturing an electrode, the first area and the second area, where the protrusions are formed, may be simultaneously formed, through electrolytic plating without pattern coating of an adhesion promoting layer, thereby improving manufacturability and reducing the possibility of damage to an electrode.

The plating may be performed using the method described above. According to an embodiment, an average height of the protrusions in the current collector may be 1.5 µm or more, for example, in a range of 2 µm to 3 µm. In operation 2, the pressing of the protrusions in the second area described above may be performed by the current collector pressing unit described above with reference to FIGS. 8 to 10.

### Lithium rechargeable battery

Another embodiment relates to a lithium rechargeable battery, wherein the lithium rechargeable battery includes an electrode according to embodiments of the present disclosure.

In a specific embodiment, the lithium rechargeable battery may include a positive electrode according to an embodiment and the negative electrode according to another embodiment. In another embodiment, the lithium rechargeable battery may include the positive electrode and the negative electrode according to an embodiment.

The negative electrode may be made using a composition including the above-described negative electrode active material. The negative electrode active material is the same as that described above. The composition may further include a binder and/or a conductive material. The negative electrode may be manufactured using a wet process. The binder and conductive material may be selected from common types known to those skilled in the art.

The positive electrode may be manufactured using a composition including the above-described positive electrode active material. The positive electrode active material is the same as that described above. The composition may further include a binder and/or a conductive material. The positive electrode may be manufactured using a wet process. The binder and conductive material may be selected from common types known to those skilled in the art.

The lithium rechargeable battery may further include an electrolyte. An electrolyte for a lithium rechargeable battery includes a non-aqueous organic solvent and a lithium salt.

The non-aqueous organic solvent serves as a medium through which ions involved in an electrochemical reaction of a battery may move. The non-aqueous organic solvent may be a carbonate-based, ester-based, ether-based, ketone-based, or alcohol-based solvent, an aprotic solvent, or a combination thereof, which may be used alone or in a combination of two or more.

In addition, when a carbonate-based solvent is used, cyclic carbonate and chain carbonate may be mixed and used.

In some types of lithium rechargeable batteries, a separator is positioned between the positive electrode and the negative electrode. The separator may be made of polyethylene, polypropylene, polyvinylidene fluoride, or a multilayer film including two or more layers thereof.

The separator may include a porous substrate and a coating layer which includes an organic material, an inorganic material, or a combination thereof and is positioned on one surface or both surfaces of the porous substrate.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples.

The organic material and the inorganic material may be mixed and present in one coating layer or may be present in a form in which a coating layer including an organic material and a coating layer including an inorganic material are laminated.

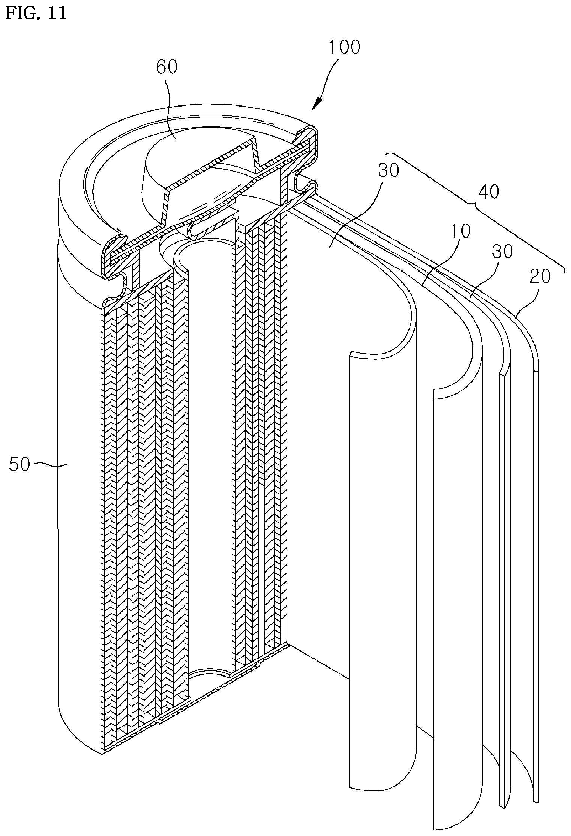

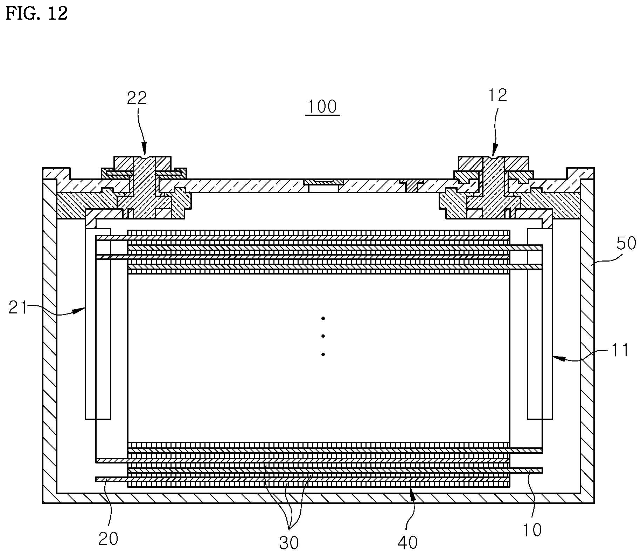

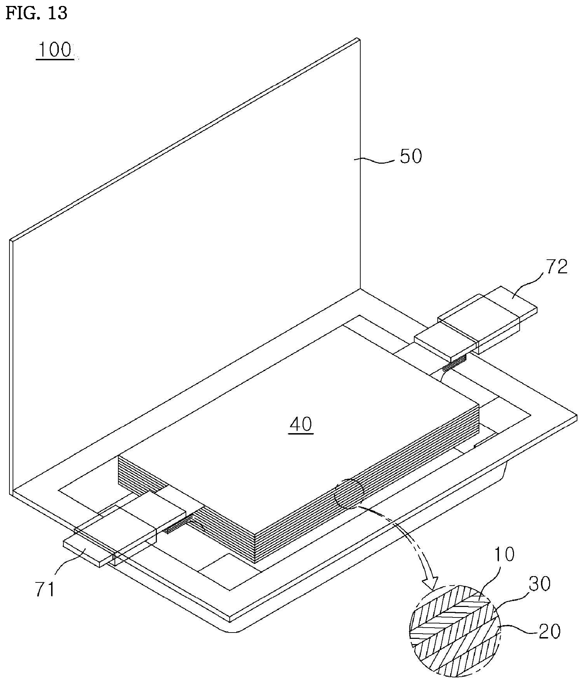

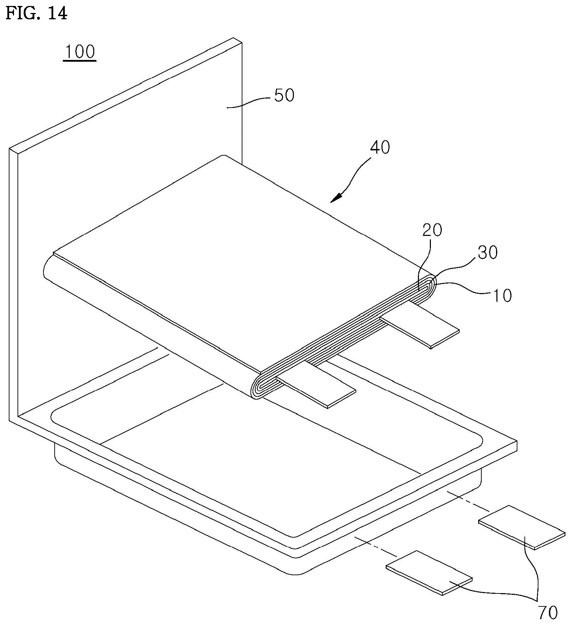

The lithium rechargeable battery may be cylindrical, prismatic, pouch-type, or coin-type depending on its shape. FIGS. 11 to 14 are schematic views of lithium rechargeable batteries according to embodiments, wherein FIG. 11 illustrates a cylindrical battery, FIG. 12 illustrates a prismatic battery, and FIGS. 13 and 14 illustrate pouch-type batteries. Referring to FIGS. 11 to 14, a lithium rechargeable battery 100 may include an electrode assembly 40 with a separator 30 interposed between a positive electrode 10 and a negative electrode 20, and a case 50 in which the electrode assembly 40 is embedded. The positive electrode 10, the negative electrode 20, and the separator 30 may be impregnated with an electrolyte (not shown). As shown in FIG. 11, the lithium rechargeable battery 100 may include a sealing member 60 that seals the case 50. In addition, in FIG. 12, the lithium rechargeable battery 100 may include a positive electrode lead tab 11, a positive electrode terminal 12, a negative electrode lead tab 21, and a negative electrode terminal 22. As shown in FIGS. 13 and 14, the lithium rechargeable battery 100 may include an electrode tab 70, that is, a positive electrode tab 71 and a negative electrode tab 72 which serve as an electrical path for guiding a current generated in the electrode assembly 40 to the outside.

A lithium rechargeable battery according to embodiments of the present disclosure may be used in vehicles, mobile phones, and/or various types of electrical devices. But the present disclosure is not limited to these examples.

The above-described lithium rechargeable battery may be used to manufacture a battery pack. A battery pack according to an embodiment of the present disclosure includes an assembly in which individual batteries are electrically connected to each other, and a pack housing accommodating the assembly. Components such as busbars for electrical connection between batteries, cooling units, and external terminals may be further included.

The battery pack can be mounted on a vehicle. The vehicle may be, for example, an electric vehicle, a hybrid vehicle, or a plug-in hybrid vehicle. The vehicle includes a four-wheeled vehicle or a two-wheeled vehicle. The vehicle according to an embodiment of the present disclosure includes the battery pack according to an embodiment of the present disclosure. The vehicle operates by receiving power from the battery pack according to one embodiment of the present disclosure.

Hereinafter, examples and a comparative example of the present disclosure will be described. However, the present disclosure is not limited to the following examples and comparative examples.

### Example 1

### Manufacturing of dry electrode film

96.7 wt% of a mixture of artificial graphite and a silicon carbon composite as a negative electrode active material, 1.8 wt% of PTFE as a binder, and 1.5 wt% of carbon black were put into a blender and mixed at a speed of 10,000 rpm for 1 minute to obtain a mixture. Next, the obtained mixture was put into a kneader and kneaded at a temperature of 110 °C and a speed of 60 rpm for 5 minutes to obtain a mixture lump. The mixture lump was put into a blender and pulverized at a speed of 14,000 rpm for 60 seconds to obtain an electrode powder. Thereafter, the electrode powder was repeatedly pressed using a calender roller (roller diameter: 200 mm and roll temperature: 70 °C) to obtain a dry electrode film (thickness: 150 µm).

### Manufacturing of current collector

Plating was used to form protrusions in a copper current collector . An average height of the protrusions was 2.5 µm.

### Manufacturing of electrode

An electrode was made using an apparatus as described with reference to FIG. 10. The current collector was rolled at a line pressure of 0.5 ton/cm between rollers 360 heated to a temperature of 75 °C with a width of 10 mm in a length direction of the current collector. The dry electrode film was laminated, and a portion rolled by the rollers was removed to make a dry electrode.

### Example 2

An electrode was made by the same method as in Example 1, except that a current density was increased in a plating method in Example 1 to change an average height of a plurality of protrusions of a current collector to 5.0 µm.

### Example 3

An electrode was made by the same method as in Example 1, except that a current density was increased in a plating method in Example 1 to change an average height of a plurality of protrusions of a current collector to 3.0 µm.

### Comparative Example 1

An electrode was made by the same method as in Example 1, except that a current density was decreased in a plating method in Example 1 to change an average height of a plurality of protrusions of a current collector to 1.2 µm.

For the examples and comparative examples, the average height of the protrusions of the current collector after plating, the average height of the protrusions of a first area, and the average height of the protrusions of a second area are shown in Table 1 below.

In the first area, adhesion between the current collector and the dry electrode film was evaluated in a 180° peel test. When the second area was made, it was determined whether the dry electrode film was removed peeled by hand. ("O" indicates peelable, "×" indicates non-peelable).

**Table 1**

| | Average height of protrusions on current collector after plating (µm) | Average height of protrusions of first area (µm) | Average height of protrusions of second area (µm) | Adhesion between current collector and dry electrode film in first area | Removal of electrode film in second area |
|---|---|---|---|---|---|
| Example 1 | 2.5 | 2.0 | 0.6 | 2.2 gf/mm | O |
| Example 2 | 5.0 | 3.0 | 1.0 | 1.1 gf/mm | O |
| Example 3 | 3.0 | 2.5 | 0.7 | 2.3 gf/mm | O |
| Comparative Example 1 | 1.2 | 1.0 | 0.2 | 0.2 gf/mm | O |

As shown in Table 1 above, in the electrodes of the examples, adhesion between the current collector and the dry electrode film was high without an adhesion promoting layer on the current collector, the formation of an uncoated portion was easy, and manufacturability was excellent.

However, as also shown in Table 1 above, when the average height of the protrusions of the first area was outside a range of the present disclosure, the adhesion between the current collector and the dry electrode film was not high.

According to the present disclosure, adhesion between a current collector and a dry electrode film is high and, thus, there is no need to form an adhesion promoting layer on the current collector. According to the present disclosure, an uncoated portion can be easily formed in an electrode without the need to pattern-coat a current collector with an adhesion promoting layer to form an uncoated portion.

However, the effects that may be achieved through the present disclosure are not limited to the above-described effects, and other technical effects that are not described herein will be clearly understood by those skilled in the art from the following descriptions of the present disclosure.

Although the present disclosure has been described above by way of limited examples and drawings, the present disclosure is not limited thereto, and various modifications and variations are possible by those of ordinary skill in the art within the scope of the present disclosure.

## Claims

1. An electrode for a rechargeable battery, the electrode comprising:
a current collector; and
a dry electrode film provided on an area of the current collector,
wherein a plurality of protrusions extend from the current collector in the area,
wherein the dry electrode film is in contact with the plurality of protrusions, and
wherein an average height of the protrusions is greater than 1.0 µm.

2. The electrode of claim 1, wherein at least a portion of the dry electrode film in the area is positioned between the protrusions.

3. The electrode of claim 1 or 2, wherein an average distance between the protrusions is 2.0 µm or less.

4. The electrode of claim 1, 2 or 3, wherein the area is free of an adhesion promoting layer.

5. The electrode of any preceding claim, wherein the protrusions provide adhesion with the dry electrode film.

6. The electrode of any preceding claim, wherein the protrusions are formed by performing plating on the current collector.

7. The electrode of any preceding claim, wherein the area is a first area and the current collector further includes a second area adjacent to the first area,
wherein a plurality of the projections extend from the current collector in the second area, and
wherein the dry electrode film is not provided in the second area,
and wherein optionally at least one of:
an average height of the protrusions in the second area is less than the average height of the protrusions in the first area, and wherein further optionally the average height of the protrusions in the second area is 2.0 µm or less; and/or
the protrusions in the first area and the protrusions in the second area are formed by plating on the current collector.

8. The electrode of any preceding claim, wherein the current collector formed from copper foil,
wherein the dry electrode film includes a negative electrode active material and a binder,
wherein the negative electrode active material includes at least one of a carbon-based negative electrode active material and a silicon-based negative electrode active material, and the negative electrode active material has an average particle diameter (D50) of 1 µm to 30 µm, and
wherein the binder includes polytetrafluoroethylene (PTFE), polyolefin, or a mixture thereof.

9. An apparatus for manufacturing an electrode for a rechargeable battery, the apparatus comprising:
a current collector transfer device configured to transfer a current collector that includes a plurality of protrusions extending from the current collector;
a current collector pressing device configured to press an area of the current collector transferred from the current collector transfer device;
a dry electrode film rolling device configured to laminate a dry electrode film to the current collector transferred from the current collector pressing device and roll the dry electrode film; and
a dry electrode film removing device configured to remove a portion of the dry electrode film that corresponds to the pressed area of current collector.

10. The apparatus of claim 9, wherein the protrusions of the current collector in the current collector transfer device have an average height of 1.5 µm or more.

11. The apparatus of claim 9 or 10, wherein the current collector is free of an adhesion promoting layer.

12. The apparatus of claim 9, 10 or 11, wherein at least one of:
the current collector pressing device includes at least one of a pressing device including a dancer roller, a lamination roller having a surface partially protrudes, and a vertically movable lamination roller;
the current collector pressing device presses the current collector transferred from the current collector transfer device by 30% or less of an average height of the protrusions of the current collector.

13. The apparatus of any one of claims 9 to 12, wherein at least one of:
the dry electrode film rolling device includes a part configured to roll the dry electrode film under conditions of a temperature of 20 °C to 150 °C and a pressure of 0.01 ton/cm to 10 ton/cm;
the dry electrode film removing device includes at least one of a brush, adhesive tape, a vacuum suction device, an ultrasonic wave generator, a laser, and an air knife.

14. The apparatus of any one of claims 9 to 13, further comprising a tab forming unit configured to form a tab in the area of the dry electrode film.

15. A rechargeable battery comprising the electrode for a rechargeable battery of any one of claims 1 to 8.
